# EUROPÄISCHE PATENTSCHRIFT

(11) **EP 0 515 918 B1**
(45) Veröffentlichungstag und Bekanntmachung des Hinweises auf die Patenterteilung: **08.03.1995**
(21) Anmeldenummer: 92108140.2
(22) Anmeldetag: 14.05.1992
(51) Int. Cl.: A61C 17/00, B01D 21/24

(54) **Entleerbares Sedimentiergefäss und Verfahren zu seiner Entleerung**
Drainable sedimentation vessel and method for draining the same
Réservoir à sédimentation vidable et procédé pour le vider

(30) Priorität: 28.05.1991 DE 4117479
(43) Veröffentlichungstag der Anmeldung: 02.12.1992
(73) Patentinhaber: Eitenmüller, Klaus, Dr., D-64753 Brombachtal (DE)
(72) Erfinder: Eitenmüller, Klaus, Dr., D-64753 Brombachtal (DE)
(74) Vertreter: Tetzner, Volkmar, Dr.-Ing. Dr. jur.

(56) Entgegenhaltungen:
- AU-B- 507 783
- DE-C- 209 859
- DE-U- 8 533 545
- GB-A- 2 141 044
- US-A- 1 468 374

## Beschreibung

Die Erfindung betrifft ein entleerbares Sedimentiergefäß, insbesondere ein für die Amalgamabscheidung bestimmten Sedimentiergefäßes, sowie ein Verfahren zum Entleeren eines solchen Gefäßes.

Eine Vorrichtung nach dem ersten Teil von Anspruch 1 sowie ein Verfahren nach dem ersten Teil von Anspruch 6 sind aus der AU-B-507-783 bekannt.

Entleerbare Sedimentiergefäße, die insbesondere zur Amalgamabscheidung geeignet sind und für den Betrieb in zahnärztlichen Praxen genehmigt wurden, sind modifizierte Laborzentrifugen. Das in diesen Zentrifugen abzuscheidende Amalgam liegt häufig im Feinschliff vor und wirkt sich besonders nachteilig dadurch aus, daß diese Substanz zum einen sintert und zum anderen äußerst störende Schmirgeleigenschaften aufweist. Dies führt dazu, daS die Lager der Zentrifugen, auch wenn sie noch so gut abgedichtet sind, in relativ kurzer Zeit zerstört werden.

In anderen Bereichen sind vielerlei Sedimentiergefäße bekannt, die nicht nach dem Prinzip der Zentrifugalkraft arbeiten, sondern bei denen die Sedimentierung durch Schwerkraft erfolgt, indem sich beispielsweise die in einer Flüssigkeit befindlichen festen Bestandteile am Boden des Sedimentiergefäßes ablagern. Das Entleeren dieser Gefäße erfolgt durch Entsorgung des ganzen Behälters. Wird jedoch ein derartiges Sedimentiergefäß im Dauerbetrieb eingesetzt, hat dies den Nachteil zur Folge, daß bei jeder Entleerung auch eine relativ große Menge an belasteter Flüssigkeit entsorgt werden muß.

Aus der AU-B-507 783 ist ein Amalgamabscheider bekannt, dessen Sedimentiergefaß eine mit einem Klappenventil versehene Bodenöffnung aufweist. Bei anliegendem Saugdruck verschließt das Klappenventil die Bodenöffnung. Außerhalb des Sedimentiergefäßes und um das Klappenventil herum erstreckt sich ein innerer Zylinder sowie ein dazu parallel angeordneter äußerer Zylinder nach unten. Ein lösbar anschließbarer Auffangbehälter ist am äußeren Zylinder gehaltert. Bei geöffnetem Klappenventil gelangen schwerere Teilchen und Flüssigkeit in den Auffangbehälter. Während sich die schwereren Teilchen am Boden des Auffangbehälters absetzen, steig die Flüssigkeit zwischen dem inneren und äußeren Zylinder nach oben und wird dort über eine Entleerungsleitung abgeführt.

Der Erfindung liegt daher die Aufgabe zugrunde, ein entleerbares Sedimentiergefäß gemäß dem Oberbegriff des Anspruches 1 sowie ein Verfahren zum Entleeren eines Sedimentiergefäßes entsprechend dem Gattungsbegriff des Anspruches 6 derart zu entwickeln, daß sich das entleerbare Sedimentiergefäß durch eine lange Lebensdauer auszeichnet und eine einfache Möglichkeit zur Entleerung des Gefäßes besteht, wobei im wesentlichen nur das abgelagerte Sediment entfernt wird.

Erfindungsgemäß wird diese Aufgabe duch die kennzeichnenden Merkmale der Ansprüche 1 und 6 gelöst.

Es findet dabei ein Sedimentiergefäß Verwendung, das wenigstens eine Kammer enthält, deren Boden eine Entleerungsöffnung aufweist, wobei an diese Entleerungsöffnung ein Auffangbehälter lösbar anschließbar ist. Zum Entleeren des Sedimentiergefäßes ist ein die Entleerungsöffnung verschließender, von oben in die Kammer einführbarer Verschlußkörper vorgesehen.

Nach Verschließen der Entleerungsöffnung durch den Verschlußkörper ist ein Austauschen des Auffangbehälters gegen einen neuen möglich. Auf diese Weise wird lediglich das in dem Auffangbehälter abgelagerte Sediment mit einem kleinen Rest an Flüssigkeit entfernt. Es ist somit nicht nötig, das gesamte Gemisch aus flüssigen und festen Bestandteilen aus der Kammer zu entsorgen.

Das erfindungsgemäße Sedimentiergefäß besteht im wesentlichen nur aus wenigstens einer Kammer, an der ein Auffangbehälter lösbar angeschlossen ist. Die festen Bestandteile aus einem Flüssigkeits-Feststoff-Gemisch lagern sich aufgrund der Schwerkraft im Auffangbehälter ab. Die Schmirgeleigenschaften, wie sie insbesondere bei Amalgamfeinschliff auftreten, können sich hier nicht nachteilig auswirken. Dadurch ist eine lange Lebensdauer des Sedimentiergefäßes gewährleistet.

Weitere Merkmale der Erfindung sind Gegenstand der Unteransprüche und werden anhand der Zeichnung und der Beschreibung näher erläutert.

In der Zeichnung zeigen
- Fig.1: eine Vorderansicht eines Sedimentiergefäßes,
- Fig.2: eine Seitenansicht des Sedimentiergefäßes,
- Fig.3: eine Aufsicht des Sedimentiergefäßes,
- Fig.4: eine Ansicht eines weiteren Ausführungsbeispieles eines Verschlußkörpers.

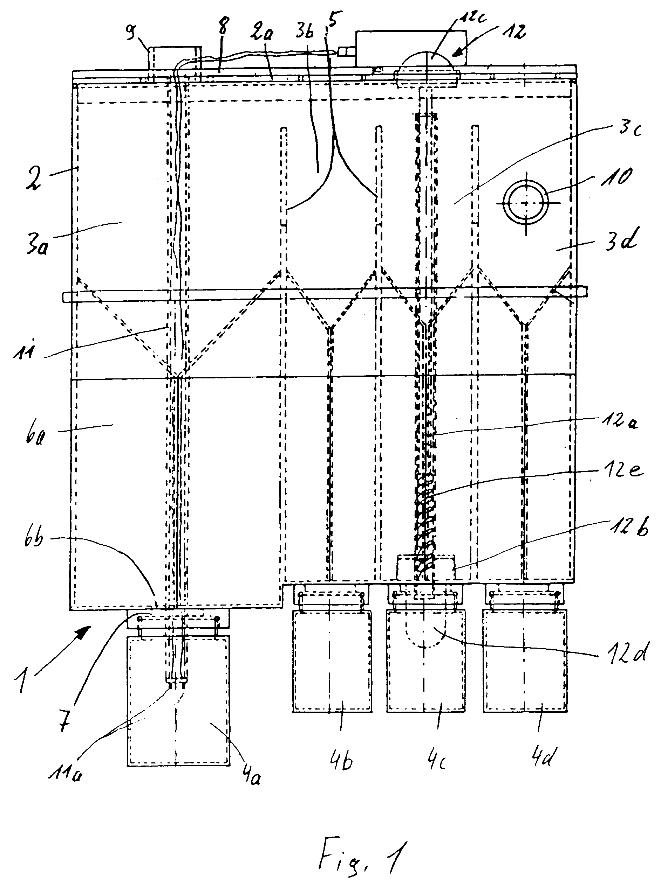

Im folgenden wird der Aufbau eines entleerbaren Sedimentiergefäßes 1 anhand der Fig.1 bis 3 beschrieben.

Das Sedimentiergefäß 1 besteht im wesentlichen aus einem im Innern in vier Kammern 3a, 3b, 3c, 3d unterteilten Gehäuse 2 sowie aus den einzelnen Kammern zugeordneten Auffangbehältern 4a, 4b, 4c und 4d.

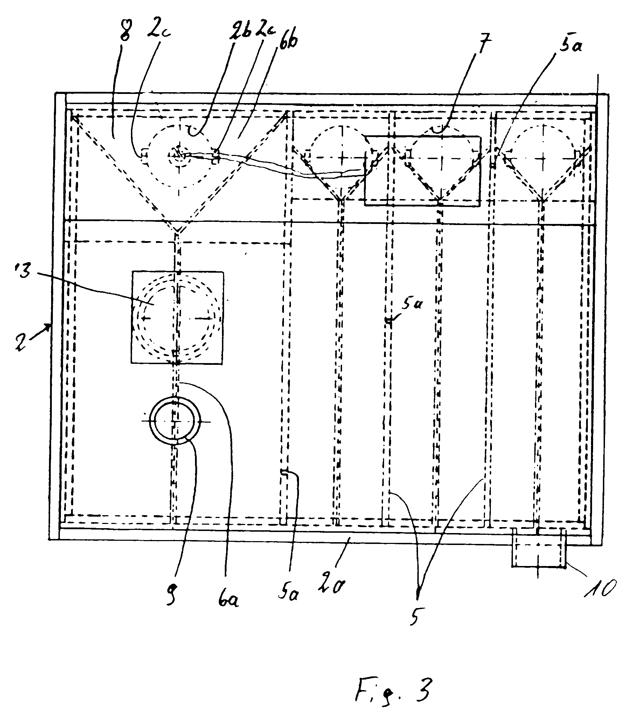

Das Gehäuse ist oben mit einem lösbar befestigten Deckel verschlossen. Im Inneren des Gehäuses 2 sind die einzelnen Kammern 3a bis 3d durch Zwischenwände 5 voneinander getrennt. Die Oberkanten dieser Zwischenwände 5 schließen dabei nicht mit dem Deckel 2a ab, so daß im Bereich des Deckels 2a des Sedimentiergefäßes 1 eine offene Verbindung zwischen den Kammern 3a bis 3d besteht. Zusätzlich ist im oberen Bereich jeder Zwischenwand 5 ein senkrechter Schlitz 5a vorgesehen. Bei der Anordnung der Schlitze 5a in den Zwischenwänden 5 ist darauf zu achten, daß zumindest nicht die Schlitze zweier benachbarter Zwischenwände unmittelbar gegenüberliegen und ferner der Schlitz 5a in der letzten Zwischenwand 5 möglichst weit von der Abführöffnung 10 entfernt vorgesehen wird. Wie aus Fig.3 ersichtlich wird, ist bei diesem Ausführungsbeispiel der Schlitz 5a in der Zwischenwand 5 zwischen der ersten und zweiten Kammer in der Nähe der Rückwand 2d und der Schlitz 5a der zweiten Zwischenwand 5 etwa in ihrer Mitte angeordnet, während der Schlitz 5a der letzten Zwischenwand 5 im vorderen, der Rückwand 2d abgewandten Bereich vorgesehen ist.

Jede der vier Kammern weist einen Boden 6 auf, der zunächst durch eine abwärts geneigte V-förmige Rinne 6a gebildet wird, die dann am Ende in ein horizontales Bodenstück 6b übergeht. Jedes horizontale Bodenstück 6b weist eine Entleerungsöffnung 7 auf, an die jeweils einer der Auffangbehälter 4a bis 4d lösbar angeschlossen ist. Dieser Anschluß kann beispielsweise mittels einer Überwurfmutter oder durch unmittelbares Eindrehen des Auffangbehälters erfolgen. Um ein dichtes Verschließen zu gewährleisten, ist eine Dichtung vorgesehen, die beispielsweise durch eine Ringdichtung aus chemikalienresistentem Weichgummi gebildet wird.

Senkrecht über den Entleerungsöffnungen 7 der Kammern 3a bis 3d ist im Deckel 2a des Sedimentiergefäßes 1 eine Abdeckleiste 8 vorgesehen. Wird die Abdeckleiste 8 abgenommen, werden im Deckel 2a senkrecht über jeder Entleerungsöffnung 7 angeordnete Öffnungen 2b und jeweils parallel gegenüberliegende Nuten 2c sichtbar.

Der Abdeckleiste 8 gegenüberliegend ist über der ersten Kammer 3a im Deckel 2a eine Zuführöffnung 9 vorgesehen, durch die ein zu sedimentierendes Flüssigkeits-Feststoff-Gemisch in das Sedimentiergefäß 1 eingeleitet werden kann. Eine Abführöffnung 10 ist in der Rückwand 2d des Gehäuses 2 in der letzten Kammer 3d vorgesehen.

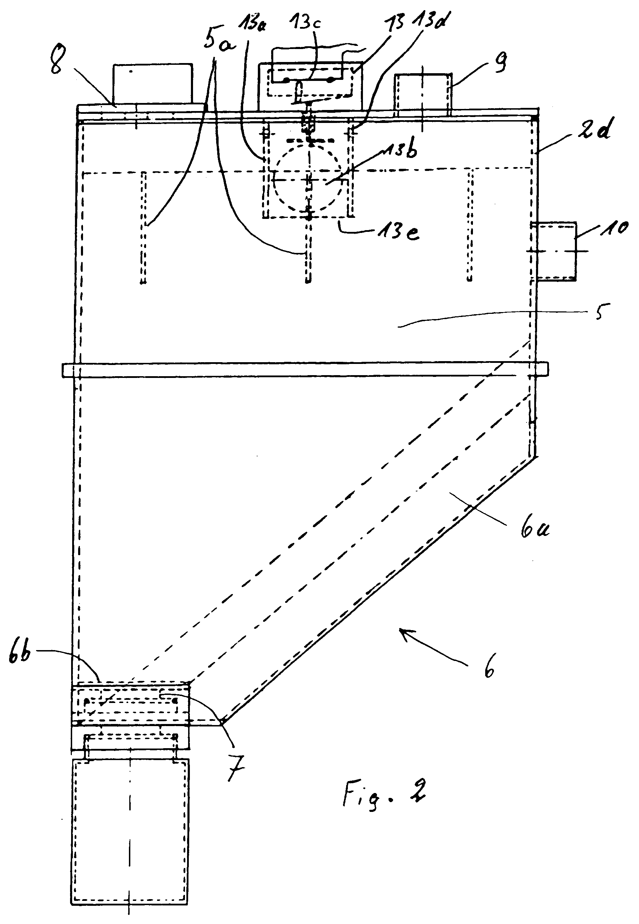

Die Schlitze 5a der Zwischenwände 5 sind so weit eingeschnitten, daß sie etwa mit der Unterkante der Abführöffnung 10 in gleicher Höhe liegen (siehe Fig.2).

Die erste Kammer 3a und der zugehörige erste Auffangbehälter 4a sind doppelt so groß wie die anderen Kammern bzw. Auffangbehälter dimensioniert, wobei das Volumenverhältnis zwischen Kammer und Auffangbehälter beispielsweise 25 zu 1 beträgt.

Wie aus Fig.1 ersichtlich wird, ist durch die erste Kammer 3a in den Auffangbehälter 4a ein elektronischer Füllstandsmesser 11 eingeführt, der in geeigneter Weise am Deckel 2a des Sedimentiergefäßes 1 oder direkt an der Abdeckleiste 8 befestigt ist und durch Abnehmen der Abdeckleiste 8 mit herausgenommen werden kann. Sobald das sich ablagernde Sediment im ersten Auffangbehälter 4a ein bestimmtes, voreinstellbares Volumen überschreitet, tauchen zwei Kontaktstifte 11a des Füllstandsmessers 11 in das Sediment ein und geben ein elektrisches Alarmsignal. Die Kontaktstifte 11a sind aus Acrylglas gebildet, wobei der eine Kontaktstift einen UV-Lichtsender und der andere einen Empfänger aufweist. Das emittierte UV-Licht wird durch einen Minicomputer codiert und getaktet, so daß keine Fehlinformation entstehen kann. Sobald der Empfänger den identifizierbaren Impuls nicht mehr empfängt, - weil das sich ablagernde Sediment die Verbindung zwischen beiden Kontaktstiften unterbricht - wird über ein nicht näher veranschaulichtes Relais Alarm gegeben. So kann beispielsweise bei einem Füllvolumen des Auffangbehälters von 95 Prozent und bei 100 Prozent je eine Anzeige an einem zweckmäßig plazierten Display aufleuchten. zusätzliche Schallsignale sind dabei auch denkbar.

Im Rahmen der Erfindung sind jedoch auch andere Möglichkeiten denkbar, um den Füllstand des ersten Auffangbehälters 4a anzuzeigen.

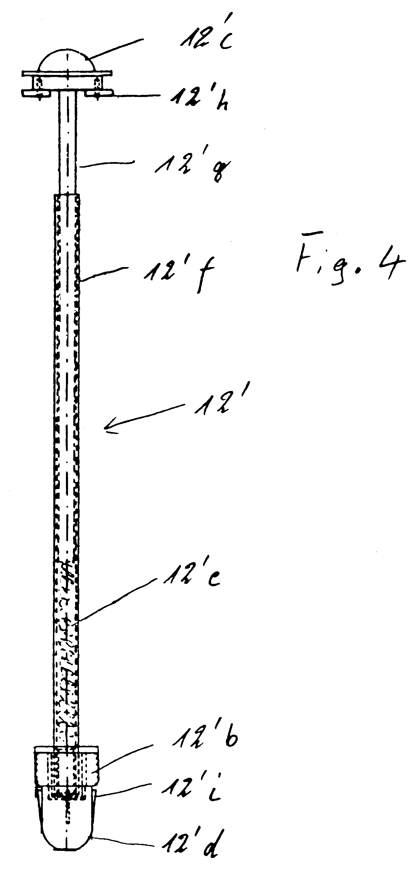

Zum Zwecke des Entleerens des Sedimentiergefäßes 1 ist ein zum zeitweisen Verschließen der Entleerungsöffnung 7 bestimmter, von oben in die Kammern 3a bis 3d einführbarer Verschlußkörper 12 vorgesehen. Dieser Verschlußkörper 12 besteht im wesentlichen aus einem stangenförmigen Teil 12a, der an seinem unteren, mit einer Entleerungsöffnung 7 in Berührung kommenden Ende ein Dichtungselement 12b aufweist und an dessen anderem Ende ein Feststellelement 12c vorgesehen ist. Das Feststellelement 12c steht mit einem Federelement 12e in Verbindung (Fig.1, 4), so daß das Feststellelement in Richtung des stangenförmigen Teils 12a gegen Federkraft beweglich ist.

An das Dichtungselement 12b schließt sich ein Teil 12d des Verschlußkörpers 12 an, der während des Verschließens einer Entleerungsöffnung 7 durch diese in den Auffangbehälter hineinreicht.

Wie aus Fig.2 und 3 ersichtlich wird, ragt in die erste Kammer 3a ein Pegelmesser 13 hinein. Dieser Pegelmesser 13 besteht im wesentlichen aus einem am Deckel 2a befestigten und nach unten offenen Führungsrohr 13a, einem im Führungsrohr beweglichen kugelförmigen Schwimmer 13b sowie einem durch den Schwimmer 13b betätigbaren Schalter 13c. Das Führungsrohr 13a weist in seinem oberen Bereich Entlüftungslöcher 13d auf. Am nach unten offenen Ende des Führungsrohres 13a ist quer eine Kunststoffsehne 13e gespannt, die ein Herausfallen des Schwimmers 13b verhindern soll.

Im folgenden wird der Betrieb und das Entleeren des Sedimentiergefäßes 1 erläutert.

Ein zu sedimentierendes Flüssigkeits-Feststoff-Gemisch gelangt über die Zuführöffnung 9 zunächst in die erste Kammer 3a, wo es zunächst zur Ruhe kommt und der Sedimentationsvorgang beginnt. Insbesondere die größeren und schweren festen Bestandteile werden in dem ersten Auffangbehälter 4a abgelagert. Steigt der Pegel des Gemisches in der ersten Kammer 3a bis über die Unterkante der Schlitze 5a, tritt durch diese das Gemisch in die zweite Kammer 3b. Dieser Vorgang wiederholt sich so lange, bis in der vierten Kammer 3d der Pegel des Gemisches bis zur Abführöffnung 10 angestiegen ist.

Die festen Bestandteile des Flüssigkeits-Feststoff-Gemisches werden in den einzelnen Kammern durch Sedimentation abgetrennt, so daß über die Abführöffnung 10 die von den festen Bestandteilen befreite Flüssigkeit abgeleitet werden kann.

Sollte während des Betriebes der Pegel des Flüssigkeits-Feststoff-Gemisches in der ersten Kammer 3a bis zur Zwischenwand 5 ansteigen, wird der Schwimmer 13b mitgenommen und betätigt den Schalter 13c. Durch diesen Schalter wird in geeigneter Weise die weitere Zufuhr des Flüssigkeits-Feststoff-Gemisches durch die Zuführöffnung 9 so lange unterbrochen, bis beispielsweise der Pegel des Gemisches wieder auf drei Viertel der Nutzkapazität der ersten Kammer 3a abgesunken ist.

Sobald der erste Auffangbehälter 4a mit Sediment gefüllt ist und der elektronische Füllstandsmesser 11 ein Alarmsignal gibt, muß das Sedimentiergefäß 1 entleert werden. Hierzu wird zunächst die Abdeckleiste 8 zusammen mit dem elektronischen Füllstandsmesser abgenommen, so daß jeweils senkrecht über den Entleerungsöffnungen 7 der vier Kammern die Öffnungen 2b sowie die jeder Öffnung 2b paarweise gegenüberliegenden Nuten 2c sichtbar werden.

Anschließend wird der Verschlußkörper 12 so weit in die Kammer 3a eingeführt, bis er mit seinem Dichtungselement 12b auf dem Rand der Entleerungsöffnung 7 aufliegt. Durch Druck auf das Feststellelement 12c im Sinne eines festen Aufdrückens des Dichtungselementes 12b wird das Federelement 12e zusammengedrückt. Durch Drehen des Feststellelementes 12d und anschließendes Loslassen greifen nicht näher veranschaulichte Nasen des Feststellelementes 12c in die Nuten 2c des Deckels 2a ein und arretieren dadurch das Feststellelement 12c. Das Dichtungselement 12b wird durch die Federkraft fest auf den Rand der Entleerungsöffnung 7 gedrückt, so daß ein flüssigkeitsdichtes Verschließen gewährleistet ist.

Kurz bevor das Dichtungselement mit dem Rand der Entleerungsöffnung 7 in Berührung kommt, reicht der Teil 12d bereits in den Auffangbehälter 4a hinein und verdrängt entsprechend seinem Volumen einen Teil des im Auffangsbehälter 4a befindlichen Flüssigkeits-Feststoff-Gemisches zurück in die Kammer 3a. Auf diese Weise wird beim anschließenden Lösen des Auffangbehälters 4a ein Verschütten des Flüssigkeits-Feststoff-Gemisches vermieden. Nachdem der neue Auffangbehälter wieder befestigt ist, kann der Verschlußkörper 12 wieder aus der Kammer 3a herausgezogen werden.

In analoger Weise wird das Entleeren bzw. Austauschen der anderen Auffangbehälter durchgeführt. Das obige Verfahren zum Entleeren eines Sedimentiergefäßes ermöglicht es, lediglich die Auffangbehälter zu entsorgen, während die volumenmäßig um ein Vielfaches größere Menge des Flüssigkeits-Feststoff-Gemisches in den Kammern nicht entfernt zu werden braucht.

In Fig.4 ist ein weiteres Ausführungsbeispiel eines Verschlußkörpers 12' dargestellt. Hier wird der stangenförmige Teil durch eine äußere Teleskopstange 12'f und eine in diese einführbare innere Teleskopstange 12'g gebildet. Im Inneren der äußeren Teleskopstange 12'f ist ein Federelement 12'e vorgesehen, das mit dem unteren Ende der inneren Teleskopstange 12'g in Verbindung steht.

Am oberen Ende dieser inneren Teleskopstange 12'g ist ein Feststellelement 12'c vorgesehen, das Nasen 12'h aufweist, die in die Nuten 2c des Deckels 2a des Sedimentiergefäßes 1 einführbar sind. Am unteren Ende der äußeren Teleskopstange 12'f ist ein Dichtungselement 12'b vorgesehen, das beispielsweise als Gummi-Dichtring ausgebildet ist. An das Dichtungselement 12'b schließt sich wiederum ein Teil 12'd an, der beim Verschließen einer Entleerungsöffnung bis in den Auffangbehälter hineinreicht. Um das Einführen des Teils 12'd in die entsprechende Entleerungsöffnung 7 zu erleichtern, sind an dem Teil 12'd Führungsnasen 12'i vorgesehen.

Um eine Entleerungsöffnung 7 mit dem Verschlußkörper 12' zu verschließen, wird dieser zunächst so weit in die Kammer eingeführt, bis das Dichtungselement 12'b mit dem Rand der Entleerungsöffnung 7 in Berührung kommt. Durch weiteren Druck auf das Feststellelement 12c wird die innere Teleskopstange 12'g entgegen der Kraft des Federelementes 12e weiter in die äußere Teleskopstange 12'f eingeführt. Sobald sich die Nasen 12'h des Feststellelementes 12'c in Höhe der Nuten 2c des Deckels 2a befinden, können diese durch Drehen des Feststellelementes 12'c in diese Nuten 2c eingeführt werden, wodurch der Verschlußkörper 12' arretiert wird. Durch die Federkraft wird der Verschlußkörper 12' fest in der Entleerungsöffnung gehalten und verschließt diese flüssigkeitsdicht.

## Patentansprüche

1. Entleerbares Sedimentiergefäß (1), insbesondere zur Amalgamabscheidung, wobei
a) das Sedimentiergefäß (1) wenigstens eine Kammer (3a, 3b, 3c, 3d) enthält, deren Boden (6) eine Entleerungsöffnung (7) aufweist;
b) und an diese Entleerungsöffnung 17) ein Auffangbehälter (4a, 4b, 4c, 4d) lösbar anschließbar ist;
gekennzeichnet durch folgendes Merkmal:
c) es ist ein zum zeitweisen Verschließen der Entleerungsöffnung (7) bestimmter, von oben in die Kammer (3a, 3b, 3c, 3d) einführbarer Verschlußkörper (12, 12') vorgesehen.

2. Sedimentiergefäß nach Anspruch 1, dadurch gekennzeichnet, daß das Sedimentiergefäß (1) mehrere Kammern (3a, 3b, 3c, 3d) enthält.

3. Sedimentiergefäß nach Anspruch 1, dadurch gekennzeichnet, daß der Verschlußkörper (12, 12') einen Teil (12d, 12'd) aufweist, der während des Verschließens der Entleerungsöffnung (7) in den Auffangbehälter (4a, 4b, 4c, 4d) hineinreicht.

4. Sedimentiergefäß nach Anspruch 1, dadurch gekennzeichnet, daß zum Verschließen der Entleerungsöffnung (7) ein mit dem Verschlußkörper (12, 12') zusammenwirkendes Federelement (12c, 12'c) vorgesehen ist.

5. Sedimentiergefäß nach Anspruch 1, dadurch gekennzeichnet, daß der Verschlußkörper (12, 12') in dem mit der Entleerungsöffnung (7) in Berührung kommenden Bereich ein Dichtungselement (12b, 12'b) aufweist.

6. Verfahren zum Entleeren eines insbesondere für die Amalgamabscheidung bestimmten Sedimentiergefäßes,
a) das wenigstens eine Kammer (3a, 3b, 3c, 3d) enthält, deren Boden (6) eine Entleerungsöffnung (7) aufweist, wobei an diese Entleerungsöffnung (7) ein Auffangbehälter (4a, 4b, 4c, 4d) lösbar anschließbar ist;
gekennzeichnet durch folgende Merkmale:
b) zur Entleerung des Sedimentiergefäßes (1) wird zunächst ein Verschlußkörper (12, 12') von oben so weit in die Kammer (3a, 3b, 3c, 3d) eingeführt, bis er die Entleerungsöffnung (7) verschließt;
c) sodann wird der lösbare Auffangbehälter (4a, 4b, 4c, 4d) gegen einen neuen Auffangbehälter ausgetauscht,
d) und anschließend wird der Verschlußkörper (12, 12') aus der Kammer (3a, 3b, 3c, 3d) wieder herausgezogen.

7. Verfahren nach Anspruch 6, dadurch gekennzeichnet, daß ein Sedimentiergefäß (1) Verwendung findet, das mehrere Kammern (3a, 3b, 3c, 3d) aufweist.

8. Verfahren nach Anspruch 6, dadurch gekennzeichnet, daß der Verschlußkörper (12, 12') durch Federkraft in der Entleerungsöffnung (7) gehalten wird.

9. Verfahren nach Anspruch 6, dadurch gekennzeichnet, daß der Verschlußkörper (12, 12') die Entleerungsöffnung (7) flüssigkeitsdicht verschließt.

10. Verfahren nach Anspruch 6, dadurch gekennzeichnet, daß der Verschlußkörper (12, 12') beim Verschließen der Entleerungsöffnung einen Teil der im Auffangbehälter befindlichen Flüssigkeit in die Kammer verdrängt.

## Claims

1. Drainable sedimentation vessel (1), particularly for the precipitation of amalgam, in which
a) the sedimentation vessel (1) contains at least one chamber (3a, 3b, 3c, 3d), the base (6) of which has drainage opening (7);
b) and a collecting vessel (4a, 4b, 4c, 4d) can be releasably connected to this drainage opening (7);
characterised by the following feature:
c) a closure member (12, 12') is provided which can be inserted into the chamber (3a, 3b, 3c, 3d) from above and is intended for closure of the drainage opening (7) at times.

2. Sedimentation vessel as claimed in Claim 1, characterised in that the sedimentation vessel (1) contains a plurality of chambers (3a, 3b, 3c, 3d).

3. Sedimentation vessel as claimed in Claim 1, characterised in that the closure member (12, 12') has a part (12d, 12'd) which projects into the collecting vessel (4a, 4b, 4c, 4d) during the closure of the drainage opening (7).

4. Sedimentation vessel as claimed in Claim 1, characterised in that a spring element (12c, 12'c) which co-operates with the closure member (12, 12') is provided for closure of the drainage opening (7).

5. Sedimentation vessel as claimed in Claim 1, characterised in that the closure member (12, 12') has a sealing element (12b, 12'b) in the region which comes into contact with the drainage opening (7).

6. Method of draining a sedimentation vessel intended particularly for the precipitation of amalgam,
a) which contains at least one chamber (3a, 3b, 3c, 3d), the base (6) of which has a drainage opening (7), wherein a collecting vessel (4a, 4b, 4c, 4d) can be releasably connected to this drainage opening (7);
characterised by the following features:
b) for drainage of the sedimentation vessel (1) a closure member (12, 12') is first of all inserted from above into the chamber (3a, 3b, 3c, 3d) until it closes the drainage opening (7);
c) then the releasable collecting vessel (4a, 4b, 4c, 4d) is replaced by a new collecting vessel,
d) and then the closure member (12, 12') is withdrawn again from the chamber (3a, 3b, 3c, 3d).

7. Method as claimed in Claim 6, characterised in that a sedimentation vessel (1) is used which has a plurality of chambers (3a, 3b, 3c, 3d).

8. Method as claimed in Claim 6, characterised in that the closure member (12, 12') is held by spring force in the drainage opening (7).

9. Method as claimed in Claim 6, characterised in that the closure member (12, 12') closes the drainage opening (7) so as to be fluid-tight.

10. Method as claimed in Claim 6, characterised in that when the drainage opening is closed the closure member (12, 12') forces a proportion of the fluid located in the collecting vessel into the chamber.

## Revendications

1. Récipient de sédimentation pouvant être vidé (1), en particulier pour la séparation d'amalgame,
a) le récipient de sédimentation (1) comprenant au moins une chambre (3a, 3b, 3c, 3d) dont le fond (6) comporte un trou de vidage (7) ;
b) et un bac collecteur (4a, 4b, 4c, 4d) pouvant être raccordé de manière amovible à ce trou de vidage (7) ;
caractérisé par la particularité suivante :
c) un corps obturateur (12, 12') pouvant être introduit par le haut dans la chambre (3a, 3b, 3c, 3d) et destiné à l'obturation temporaire du trou de vidage (7) est prévu.

2. Récipient de sédimentation selon la revendication 1, caractérisé en ce que le récipient de sédimentation (1) comprend plusieurs chambres (3a, 3b, 3c, 3d).

3. Récipient de sédimentation selon la revendication 1, caractérisé en ce que le corps obturateur (12, 12') comporte une partie (12d, 12'd) qui pénètre dans le bac collecteur (4a, 4b, 4c, 4d) pendant l'obturation du trou de vidage (7).

4. Récipient de sédimentation selon la revendication 1, caractérisé en ce qu'un élément de ressort (12, 12'c) coopérant avec le corps obturateur (12, 12') est prévu pour l'obturation du trou de vidage (7).

5. Récipient de sédimentation selon la revendication 1, caractérisé en ce que le corps obturateur (12, 12') comporte un élément d'étanchéité (12b, 12'b) dans la région qui entre en contact avec le trou de vidage (7).

6. Procédé de vidage d'un récipient de sédimentation destiné en particulier à la séparation d'amalgame,
a) et comprenant au moins une chambre (3a, 3b, 3c, 3d) dont le fond (6) comporte un trou de vidage (7), un bac collecteur (4a, 4b, 4c, 4d) pouvant être raccordé de manière amovible à ce trou de vidage (7) ;
caractérisé par les particularités suivantes :
b) pour vider le récipient de sédimentation (1), un corps obturateur (12, 12') est tout d'abord introduit par le haut dans la chambre (3a, 3b, 3c, 3d) jusqu'à ce qu'il obture le trou de vidage (7) ;
c) ensuite, le bac collecteur amovible (4a, 4b, 4c, 4d) est échangé contre un nouveau bac collecteur,
d) puis le corps obturateur (12, 12') est à nouveau extrait de la chambre (3a, 3b, 3c, 3d).

7. Procédé selon la revendication 6, caractérisé par l'utilisation d'un récipient de sédimentation (1) qui comprend plusieurs chambres (3a, 3b, 3c, 3d).

8. Procédé selon la revendication 6, caractérisé en ce que le corps obturateur (12, 12') est retenu par la force d'un ressort dans le trou de vidage (7).

9. Procédé selon la revendication 6, caractérisé en ce que le corps obturateur (12, 12') obture le trou de vidage (7) de manière étanche.

10. Procédé selon la revendication 6, caractérisé en ce que, lors de l'obturation du trou de vidage, le corps obturateur (12, 12') refoule dans la chambre une partie du liquide qui se trouve dans le bac collecteur.
